# EUROPEAN PATENT APPLICATION

(11) **EP 1 710 735 A1**
(43) Date of publication of application: **11.10.2006**
(21) Application number: 05290786.2
(22) Date of filing: 08.04.2005
(51) Int. Cl.: G06N 3/04, A63F 13/00, G09B 3/00

(54) **Artificial neural network guessing method and game**

(71) Applicant: 20Q.net Inc., Ottawa, ON K1Y 0M9 (CA)
(72) Inventor: Burgener, Robin, Ottawa, ON K1Y 0M9 (CA)
(74) Representative: Schwartz, Thierry J.

(57) **Abstract**

A method for guessing, in an electronic game, an object that a user is thinking of, from a set of target objects, after asking the user at least one question (106, 107, 108), the method utilizing a neural network structured in a target objects-by-questions matrix format, wherein each cell of the matrix defines an input-output connection weight, and the neural network can be utilized in a first mode, whereby answers to asked questions are input nodes and the target objects are output nodes, and in a second mode, whereby the target objects are input nodes and the questions are output nodes, the method comprising the steps of ranking the target objects by utilizing the neural network in the first mode; ranking the questions by utilizing the neural network in the second mode; and providing a guess in accordance with the ranking of the target objects.

## Description

The present invention relates in general to artificial intelligence games and in particular to a new and useful method of using artificial neural networks learning techniques in a "guessing" game.

Artificial Neural Networks (ANNs) are well known in the art, and are described in general in U.S. Pat. No. 4,912,654, issued March 27, 1990, to Wood ("Neural Networks Learning Method"), and in U.S. Pat. No. 5,222,194, issued June 22, 1993, to Nishimura ("Neural Network with Modification of Neuron Weights and Reaction Coefficient").

One widely used neural network (a multi-layer perceptron) includes a plurality of processing elements called neural units arranged in layers. Interconnections are made between units of successive layers. A network has an input layer, an output layer, and one or more "hidden" layers in between. The hidden layer is necessary to allow solutions of non-linear problems. Each unit is capable of generating an output signal, which is determined by the weighted sum of input signals it receives and a threshold specific to that unit. A unit is provided with inputs (either from outside the network or from other units) and uses these to compute a linear or non-linear output. The unit's output goes either to other units in subsequent layers or to outside the network. The input signals to each unit are weighted either positively or negatively, by factors derived in a learning process.

When the weight and threshold factors have been set to correct levels, a complex stimulus pattern at the input layer successively propagates between hidden layers, to result in an output pattern. The network is taught by feeding it a succession of input patterns and corresponding expected output patterns; the network learns by measuring the difference-at each output unit-between the expected output pattern and the pattern that it just produced.

Having done this, the internal weights and thresholds are modified by a learning algorithm to provide an output pattern, which more closely approximates the expected output pattern, while minimizing the error over the spectrum of input patterns. Neural network learning is an iterative process, involving multiple lessons.

Broadly speaking, neural networks have been used in control applications: (1) as subsystems used for pattern recognition, diagnostics, sensor fusion, dynamic system identification, and the like; (2) as "clones" which learn to imitate human or artificial experts by copying what the expert does; (3) as "tracking" systems, which learn strategies of action which try to make an external environment adhere to a pre-selected reference model; and (4) as systems for maximizing or minimizing a performance measure over time.

The invention described and claimed herein comprises a neural network system used in a game that "guesses" what the user (player) is thinking of after asking him a number of questions. The concept of such games - guessing games - is not new; however, conventional guessing games use other approaches to Artificial Intelligence (AI), such as "expert systems," where a set of facts and rules is input to an execution device, which will then - in the absence of new inputs - give the same answers to the same questions. These systems use a tree of decision rules to produce the desired outputs. These decision rules, and the tree that the set of rules constitute, must be devised for the particular application. Such AI entities are referred to as "non-learning AI entities."

Non-learning AI entities include knowledge bases and multi-agent processing schemes: knowledge bases are organized around collections of information with rules for making inferences and answering queries, while multi-agent schemes combine numerous entities operating on fixed algorithms. These aggregations often include convenient methods for people to update the algorithms, inference rules and other recipes that govern their behavior. However, the "learning" is actually happening in their human keepers, but not on the aggregation itself.

Also, another major problem that is readily apparent in such systems is their incapability to handle inaccurate or misleading information: if a player answers one question inaccurately, this will cause the system to pursue the wrong "branch" of the decision tree leading it to the wrong answer (or guess).

These limitations necessitate the need to replace the use of expert systems in such games with the use of neural networks that possess a higher level of artificial intelligence. The present invention satisfies this need.

To overcome the limitations of the prior art described above, and to overcome other limitations that will become apparent upon reading and understanding the present specification, the present invention accordingly provides a method for guessing, in an electronic game, an object that a user is thinking of, from a set of target objects, after asking the user at least one question, the method utilizing a neural network structured in a target objects-by-questions matrix format, wherein each cell of the matrix defines an input-output connection weight, and the neural network can be utilized in a first mode, whereby answers to asked questions are input nodes and the target objects are output nodes, and in a second mode, whereby the target objects are input nodes and the questions are output nodes, the method comprising the steps of ranking the target objects by utilizing the neural network in the first mode and by mapping at least one answer to a weight, comparing the weight of the answer to weights of cells in the neural network corresponding to that question and the target objects being ranked, and temporarily changing the weights of the corresponding cells in accordance with agreeability, and rating the target objects in accordance with the changed cell weights; ranking the questions by utilizing the neural network in the second mode; providing a guess in accordance with the ranking of the target objects; adjusting weights of cells corresponding to a guessed object in accordance to agreeability between a mapped weight of an answer and the cell weight before adjusting.

According to one aspect of the present invention, the step of ranking the questions is provided by mapping predictable answers to questions to positive and negative weights with respect to target objects highly ranked; totaling the agreeable weights and the disagreeable weights and computing a margin between the two totals for each question; and rating the questions in accordance with the margins.

According to another aspect of the present invention, the step of ranking the questions is provided by computing, for each question, margins between a weight of a cell corresponding to a most highly ranked target object and that question, and weights corresponding to other highly ranked target objects and that question; and rating the questions by comparing the margins of each question with the margins of other questions.

According to yet another aspect of the present invention, there is provided a neural network structured in an X-by-Y matrix format, wherein each cell of the matrix defines an input-output connection weight, and the neural network can be utilized in a first mode, whereby elements of the X-axis are input nodes and elements of the Y-axis are output nodes, and in a second mode, whereby the elements of the Y-axis are input nodes and the elements of the X-axis are output nodes.

According to yet a further aspect of the present invention, there is provided a game for guessing an object that a user is thinking of, from a set of target objects, after asking the user at least one question, the game utilizing a neural network structured in a target objects-by-questions matrix format, wherein each cell of the matrix defines an input-output connection weight, and the neural network can be utilized in a first mode, whereby answers to asked questions are input nodes and the target objects are output nodes, and in a second mode, whereby the target objects are input nodes and the questions are output nodes, the game comprising: means for ranking the target objects by utilizing the neural network in the first mode; means for ranking the questions by utilizing the neural network in the second mode; and means for providing a guess in accordance with the ranking of the target objects.

According to a further aspect of the present invention, there is provided A computer-readable medium bearing representations of instructions and data for causing a computer or hand-held device to perform a method for guessing an object that a user is thinking of, from a set of target objects, after asking the user at least one question, the method utilizing a neural network structured in a target objects-by-questions matrix format, wherein each cell of the matrix defines an input-output connection weight, and the neural network can be utilized in a first mode, whereby answers to asked questions are input nodes and the target objects are output nodes, and in a second mode, whereby the target objects are input nodes and the questions are output nodes, the method comprising the steps of: ranking the target objects by utilizing the neural network in the first mode; ranking the questions by utilizing the neural network in the second mode; and providing a guess in accordance with the ranking of the target objects.

The present invention provides the advantage of allowing the system to change its behavior as a result of experience and input from the players, whether voluntary or not.

The invention also provides the advantage of handling inaccurate or misleading information.

The invention, its organization, construction and operation will be best understood by reference to the following detailed description taken into conjunction with the accompanying drawings, in which:
- Figure 1A is a table that gives a matrix-like, visual illustration of how the initial, unstimulated question stimulates target objects.
- Figures 1B and 1C are tables that give matrix-like, visual illustrations of examples where target objects stimulate questions.
- Figure 2 shows an example of the mappings of answers to weights.
- Figures 3A to 3D are matrix-like tables that illustrate the target object ranking procedure, and the adjustment of the cell weights.
- Figure 4 is a matrix-like table that illustrates a question ranking procedure.
- Figure 5 is a matrix-like table that illustrates another question ranking procedure.
- Figures 6A and 6B are matrix-like tables that show how different cell weights are used for different demographic targets.

The following description is presented to enable any person skilled in the art to make use of the invention and is provided in the context of a particular application and its requirements. Various modifications to the disclosed embodiments will be readily apparent to those skilled in the art, and the general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

It will be generally understood that the terms "wrong," "inaccurate," "misleading," and "inconsistent" as used hereinafter are interchangeable. Also, it will be generally understood that terms such as "train," "teach," "learn," "know," and "lesson" as used in this document are used in the neural network sense. In addition, it will be generally understood that the terms "rank" and "prioritize" as used hereinafter are interchangeable.

An ANN is a computational model composed of neurons (or simply nodes) and connections between the nodes. The strength of each connection is expressed by a numerical value called a "weight," which can be modified. The activation of a given node is based on the activations of the nodes that have connections directed at that node and the weights on those connections. In general, a neural network incorporates some special nodes called "input nodes" with their activation external set, while other nodes are distinguished as "output nodes."

In the present invention, the neural network is structured in a matrix format (X by Y), where the cells define the weights, and which may be used with the X's as the input nodes and the Y's as the output nodes or vice versa. Specifically, the neural network of the present invention is a matrix of "questions"/"answers" by "target objects." The cells of the matrix define the relationship between the questions/answers and the target objects, and the matrix may be used with the questions/answers as the input nodes and the target objects as the output nodes, or vice versa.

In the present description and claims, "swap" means "the input nodes becoming the output nodes and the output nodes becoming the input nodes."

Since the ANN in the present invention is used for a game that asks the player a number of questions and then guesses what the player was thinking of, the matrix format described above presents the advantage of having the answers stimulate certain target objects at times and, at other times, having the target objects stimulate the acquisition of certain answers - in other words, stimulate certain questions to be asked. If the input nodes are answers to questions, the output nodes are top objects (i.e., probable objects); if the input nodes are top objects, then the output nodes are best questions to be asked. This will be best illustrated by way of example.

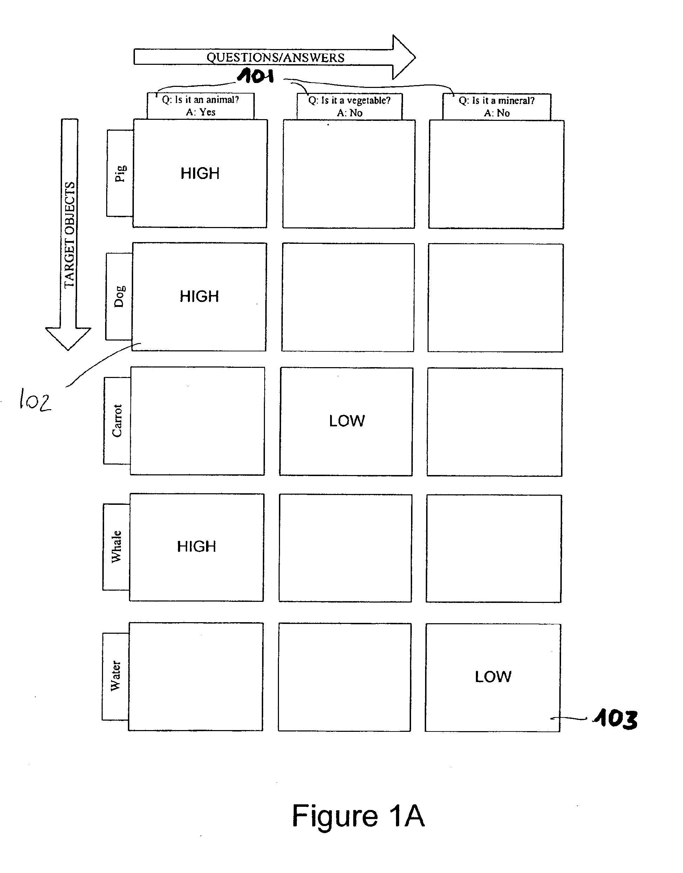

The first question 101 is usually to determine if what the player is thinking of is an animal, vegetable, mineral, etc. (Obviously, the initial question cannot be stimulated, since there are no stimulated target objects yet.) If the player answers animal, for example, this will stimulate the target objects that fall within this category, giving them a high priority 102, while the target objects that fall outside this category are given low priority 103. This is illustrated in Figure 1A.

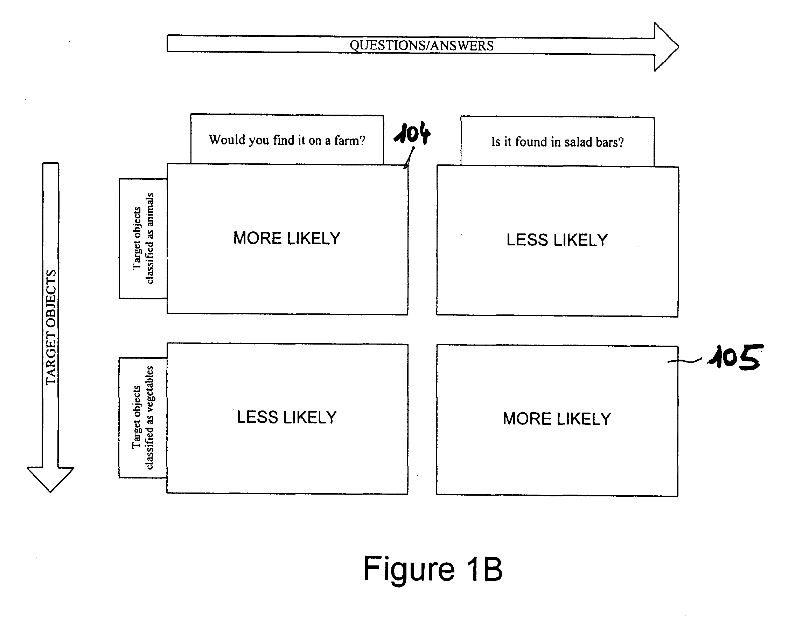

Once the target objects that fall within the animal category are stimulated, they, in turn, are more likely 104 to stimulate the question "Would you find it on a farm?" than they are to stimulate the question "Is it found in salad bars?" If, on the other hand, the player was to answer vegetable instead of animal, then "Is it found in salad bars?" would more likely 105 be the next question than "Would you find it on a farm?" This is illustrated in Figure 1B.

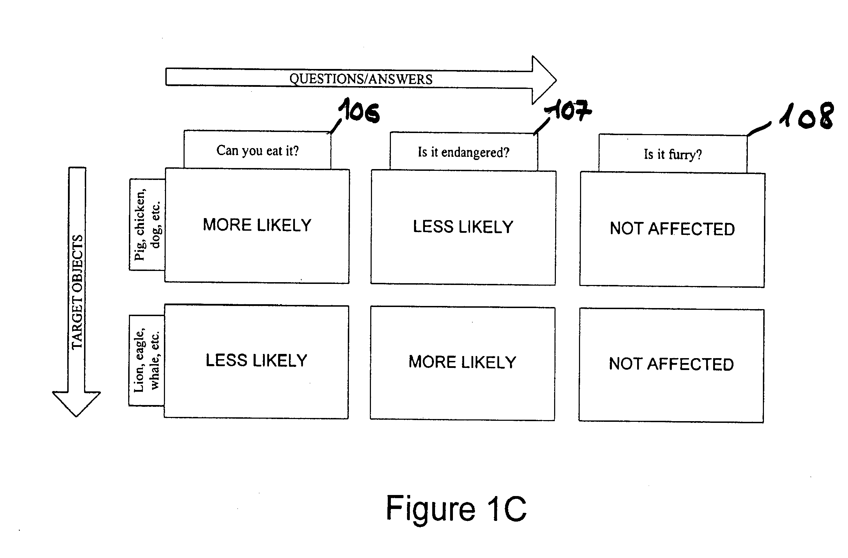

Assuming that the player was thinking of an animal that could be found on a farm and answered the first two questions ("Is it an animal, vegetable, mineral, other, or unknown?" and "Would you find it on a farm?") accordingly, the answer to the second question might favor animals like "Pig," "Chicken," and "Dog" over animals like "Lion," "Eagle," and "Whale"; and that, in turn, will favor certain questions 106 (e.g., "Can you eat it?") over other questions 107 (e.g., "Is it endangered?") to be asked, while not affecting the likelihood of yet another set of questions being asked - that is, the set of questions that are not relevant to the just-obtained information 108 (e.g., "Is it furry?"). The stimulation of the third question is illustrated in Figure 1C.

If the answer to "Can you eat it?" is "Yes," this will favor "Chicken" over "Dog," and so on, so forth.

By now, the advantages of having the ANN linked together in a matrix format, where the input nodes and output nodes can swap in the above-described fashion, should be clear. And although the weights of the input-output connections have not been discussed yet, it is very important at this point to assert that during this process, the target objects get prioritized, not filtered - in other words, target objects are prioritized by giving different weights to the question-target object connections, and these weights can be changed during reprioritization. This is a very important feature that distinguishes the present invention from other guessing games: it gives it the ability to handle misleading information.

Answering questions misleadingly is not uncommon when playing this game: different people have different perceptions. One might perceive a rabbit to be a rodent while another might not. Obviously, these two persons will answer the question "Is it a rodent?" differently. A person with certain religious beliefs might be thinking of a "Pig," and answer the question "Can you eat it?" with a "No," where a different person from a different religion might answer with a "Yes." If the ANN is taught that a "Pig" is eatable, it might give "Pig" a low priority when one indicates that what he/she is thinking of is not eatable, and then reprioritize the target objects at a later time in the game, giving "Pig" a high priority, if one was to answer "Does it have a curly tail?" with a "Yes."

Also, it should be mentioned that the ANN system does not necessarily prioritize the target objects after every question. The game usually allows the player to answer with a "Yes," "No," "Unknown," "Irrelevant," "Sometimes," "Maybe," "Probably," "Doubtful," "Usually," "Depends," "Rarely," or "Partly." Obviously, answers like "Irrelevant" and "Depends" are not very helpful, and do not add much information to what the system already knows. Accordingly, a number of questions might be asked before the ANN system does any target objects prioritization.

As mentioned earlier, the strength of the connections between the nodes are expressed by numerical values called weights, which can be modified. Each cell in the ANN matrix represents the strength of the relating answer-target object or target object-question connection - the weight. For optimization, each weight is a single byte with seven bits describing the strength of the bond and one bit indicating the type of the bond - "positive" or "negative"; however, more precision may be used, or conversely, the data may be compressed to a couple of bits.

The role of the neural network is to perform a function that associates input nodes with output nodes. In the following paragraphs, how the ANN ranks the target objects (where the answers are obviously the input nodes and the target objects the output nodes) and how it ranks the questions (where the target objects are the input nodes and the questions the output nodes) will be discussed.

In ranking target objects, given ZERO to N answers, the used algorithm compares the answers to the neural network and ranks the target objects accordingly.

The set of available answers is divided into two subsets, positive and negative answers, and each answer has a certain weight associated with it. Care must be practiced to distinguish between the weight of an answer (which is the degree to which a player agrees or disagrees with a question) and a cell weight (which is the strength of the input node-output node connection).

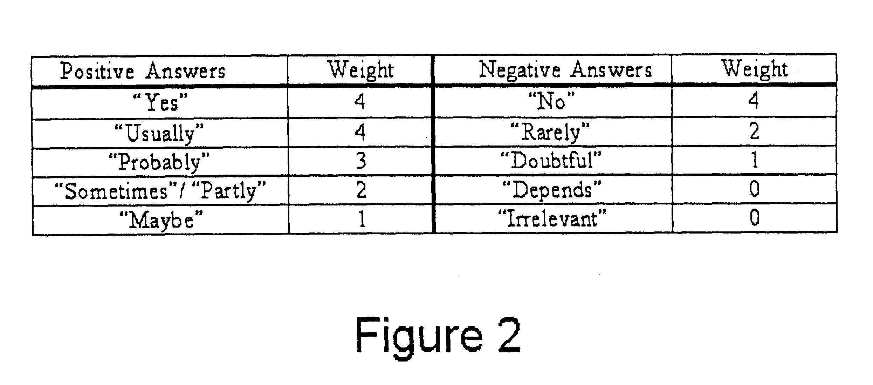

Figure 2 shows the current set of answers and the weight associated with each answer. The answer "Unknown" is not counted as an answer and is not used in these calculations. Other mapping schemes are possible including a sliding scale from "Yes" to "No," or the weight of the player's answer could even be based on the perceived inflection from a voice recognition system. (In some of the following examples, the positive 201 (+) and negative 202 (-) connotations are used with the weights 203, 204 to distinguish between positive and negative ones, respectively.)

For each target object, the algorithm compares each answered question to the corresponding cell in the neural network. The weight of the answer is either added to or subtracted from the pre-adjusted weight of the cell, depending on agreement. "Pre-adjusted" as used here means adjusted from previous implementations. (The adjustment of the cell weights is discussed below.) There is "agreement" when the provided answer and the pre-adjusted weight of the cell are either both positive or both negative.

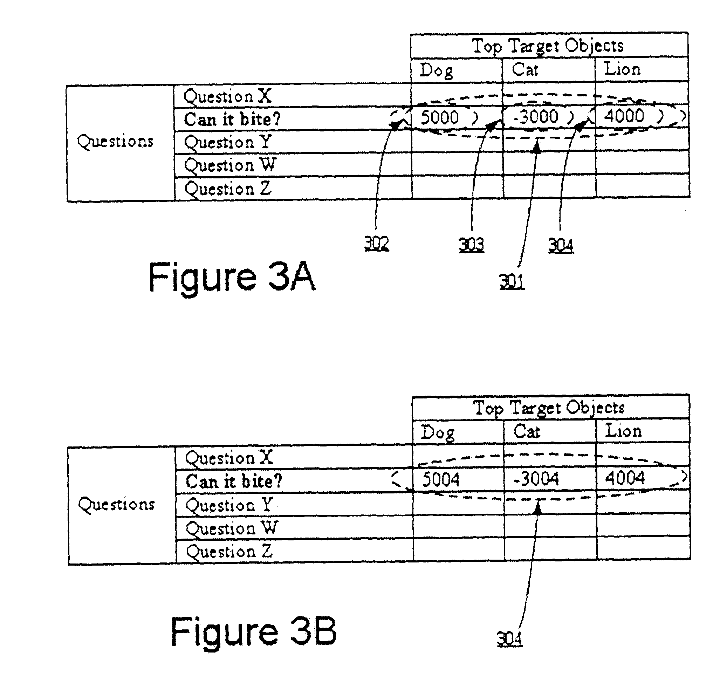

Figures 3A to 3D are matrix-like tables that illustrate the target object ranking method. These figures use hypothetical numbers, chosen accordingly to serve the purpose of illustration. It is given that the player is thinking of a "Dog," and for simplicity, it is assumed that the algorithm, at this point, has narrowed the top target objects to three: "Dog," "Cat," and "Lion." Figure 3A shows the pre-adjusted weights of the cells corresponding to the "Can it bite?" question with respect to the three top target objects 301. Assuming the question "Can it bite?" is asked and the player answered "Yes," the algorithm will temporarily add the weight of the positive answer - namely, 4 (see Figure 2) - to the cells that have positive polarization for that question 302 and subtract the weight of that answer from the cells that have negative polarization for that question 303. Figure 3B illustrates the addition/subtraction step 304.

The algorithm will then narrow the top objects by removing the target objects that have a value significantly lower than the other top objects from the top objects list. In this example, "Cat" would be removed.

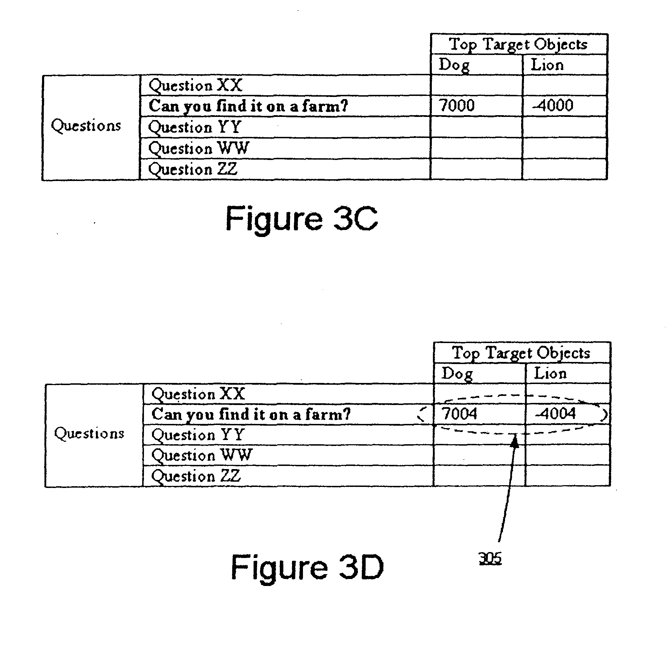

Figures 3C and 3D reiterate the above-discussed target object ranking method for a different question - "Can you find it on a farm?" - and for the remaining two top objects - "Dog" and "Lion" - to demonstrate how the algorithm further narrows the top objects to one. After the answer weight is added to the cell weight 305, "Lion" would be removed from the top objects list leaving "Dog" - the one the player was thinking of. Once the target object is guessed, the cell weights for that target object would be adjusted. The cell weight adjustment is discussed below, following the description of the question ranking procedure.

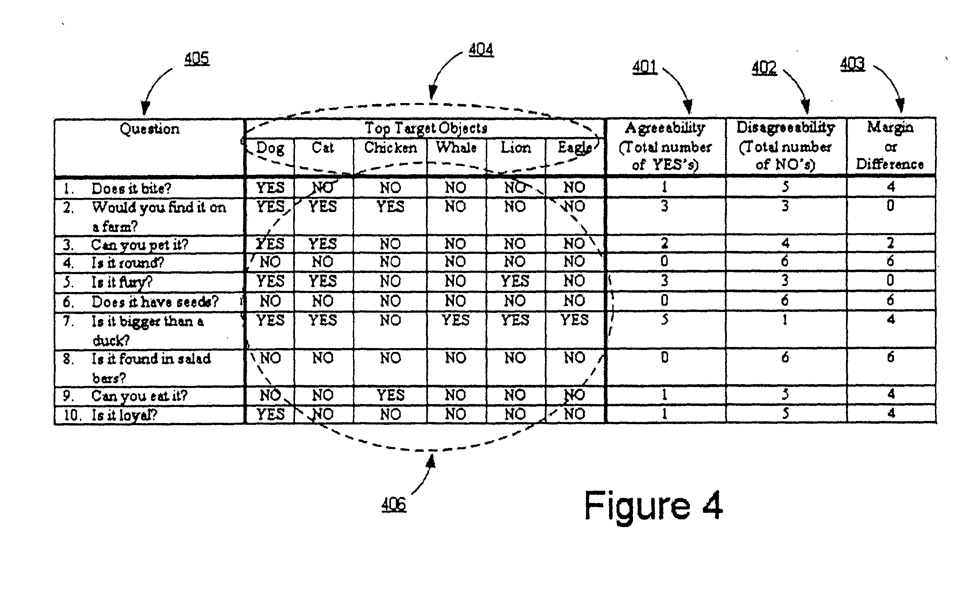

For simplicity, the question ranking procedure (and the relating figure - Figure 4) will be discussed in terms of "Yes" and "No" factors 406, where in reality, the "Yes" and "No" factors are positive and negative factors with different answer weights (Figure 2), the answer weights, of course, being taken into consideration and affecting the related calculations.

In ranking questions, the algorithm examines each question and determines how many of the top objects would be answered with "Yes" and how many would be answered with "No." The algorithm examines each question against the top target objects and for each question, it totals the "Yes" and "No" factors. The lower of the two totals is subtracted from the higher of the two, and the question with the lowest total difference would be selected as the best question to be asked next - that is, as the question which is most helpful/telling or unknown. This means that a question may be chosen because it represents a perfect balance between "Yes" and "No" answers. A 50-50 split would be ideal.

Figure 4 is a matrix-like table that demonstrates that procedure by way of example. For simplicity, it is assumed that there are six top object targets 404 and a totality of ten questions 405. The algorithm examines each of the ten questions 405 against the six top target objects 404, totals the "Yes" factors 401 and the "No" factors 402, subtracts the lower of the two totals from the higher of the two 403, and ranks the questions with lower margins (total differences) over the questions with higher margins as better questions to be asked.

As could readily be seen from the table, the most telling questions would be the second and the fifth, which have a total difference of ZERO; and the least telling questions would be the fourth, the sixth, and the eighth, which have a total difference of SIX. This is not surprising since the fourth, sixth and eighth questions are not related to animals.

As stated above, in reality, the "Yes" and "No" factors are positive and negative answers with different weights. In practice, the algorithm totals the agreeable weights and the disagreeable weights, subtracts the lower of the two from the higher of the two, and the questions with the smaller margins would be ranked higher.

Another periodically used method in selecting a question is to pick a question, the answer of which will confirm whether or not the top-most object - the top object ranked the highest among the other top objects - is correct. For each question, the corresponding cell weight of the top-most object is compared to the corresponding cell weights of the other top objects. The question with the greatest margin is chosen, the margin being calculated by subtracting the lower of the two cell weights from the higher one.

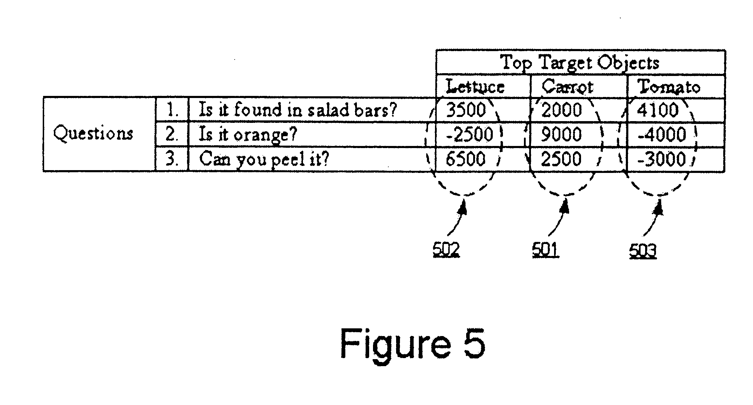

As in Figures 3A to 3D, Figure 5 uses hypothetical numbers, chosen accordingly to serve the purpose of illustration. Assuming that "Lettuce," "Carrot," and "Tomato" are the top objects and that "Carrot" is the top-most object. For simplicity, we are considering three questions only which should not be seen as limiting. Since "Carrot" is the top-most object, the algorithm will examine the carrot's cell weights corresponding to each of the three questions 501 against the lettuce's corresponding cell weights 502 and the tomato's 503. For the first question, the carrot-lettuce margin is 1500 (3500 - 2000), and carrot-tomato margin is 2100. For the second question the margins are 11500 {9000 - (-2500)} and 13000, respectively. For the third question the margins are 4000 and 5500, respectively. The algorithm would pick the second question since it provides the biggest margins. As can be readily seen, asking this question would indeed confirm that "Carrot" is the correct top-most object.

Learning in the neural network is generally accomplished by adjusting the cell weights. Once the target object has been identified - guessed correctly - the cell weights for that target object only would be modified: given the target object, the algorithm looks at each answer, and if the answer is an agreeable one, the weight of the cell is increased (usually, by adding the weight of the player's answer, a value from 1 to 4 in this case). If an answer is a disagreeable one, the weight of the cell is reduced. If the cell has no value (pre-adjusted weight from a previous implementations), a new cell weight is set according to the player's answer.

In the example of Figures 3A to 3D, once "Dog" is guessed, the algorithm would adjust the weight of the cells corresponding to the "Can it bite?" and "Can you find it on a farm?" to 5004 (figure 3B) and 7004 (figure 3D), respectively. This step should not be confused with the step discussed earlier, where the weights were temporarily added. Once the cell weights have been adjusted in this fashion, the new cell weights would be considered the "pre-adjusted" values the next time the game is played.

The algorithm could consider demographic factors while teaching the neural network. The player could be asked, for example, about his age, sex, and geographic location, and this information would be considered in the teaching process and used the next time a person from the same demographic group is playing the game. This is useful in reducing the number of misleading answers caused by different perceptions as discussed above, since people from the same demographic group tend to have similar perceptions.

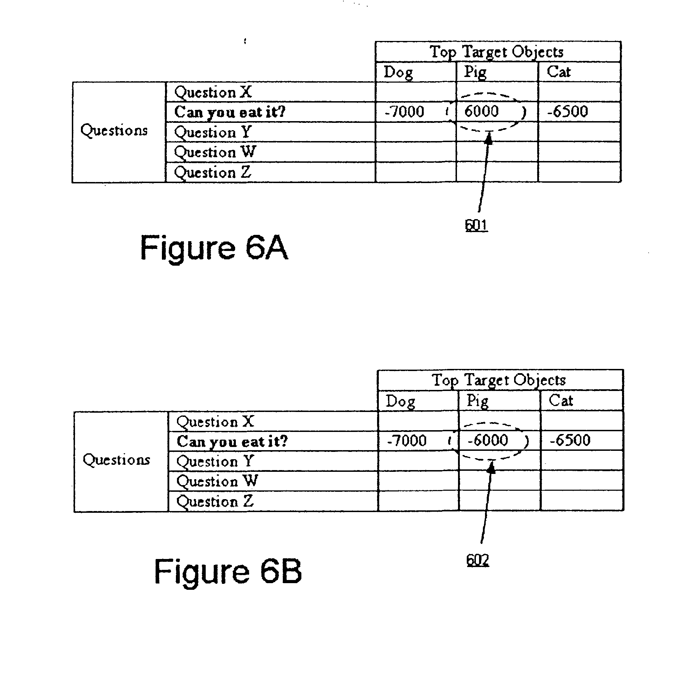

In this case, a cell would have different cell weights, each weight associated with a certain demographic. In Figure 6A, the cell corresponding to "Can you eat it?" has a positive weight 601 for "Pig," while in Figure 6B, it has a negative weight 602. If a person belonging to a demographic group that perceives a "Pig" as eatable is playing the game, the algorithm would use the "positive weight" 601 weight with respect to that question; if a person belonging to a demographic group that perceives a "Pig" as non-eatable is playing the game, the algorithm would use the "negative weight" 602 weight with respect to that question.

Another way to classify the users into different demographic groups is by guessing which group they belong to. In this case, the algorithm would utilize the neural network a demographic group-by-questions matrix format, and guess the group - instead of the target object - in a similar way as described above.

Generally, the method of the present invention is implemented using a general-purpose computing device or a hand-held device. The computing/hand-held device drives and associated computer-readable media provide nonvolatile storage of computer-readable instructions, data structures, program modules and other data as described herein. The computer-readable medium bears the representations of instructions and data used for causing the computer or device to perform the method of the present invention.

Although various preferred embodiments of the present invention have been described herein in detail, it will be appreciated by those skilled in the art, that variations may be made thereto without departing from the spirit of the invention or the scope of the appended claims.

## Claims

1. Method for guessing, in an electronic game, an object that a user is thinking of, from a set of target objects, after asking the user at least one question, the method utilizing a neural network structured in a target objects-by-questions matrix format, **characterized in that** each cell of the matrix defines an input-output connection weight, and the neural network can be utilized in a first mode, whereby answers to asked questions are input nodes and the target objects are output nodes, and in a second mode, whereby the target objects are input nodes and the questions are output nodes, the method comprising the steps of:
- ranking the target objects by utilizing the neural network in the first mode;
- ranking the questions by utilizing the neural network in the second mode; and
- providing a guess in accordance with the ranking of the target objects.

2. Method according to claim 1, wherein the step of ranking the target objects comprises the steps of:
- mapping at least one answer to a weight;
comparing the weight of the answer to weights of cells in the neural network corresponding to that question and the target objects being ranked, and temporarily changing the weights of the corresponding cells in accordance with agreeability; and
- rating the target objects in accordance with the changed cell weights.

3. Method according to claim 1 or 2, wherein the step of ranking the questions comprises the steps of:
- mapping predictable answers to questions to positive and negative weights with respect to target objects highly ranked;
- totaling all agreeable weights and all disagreeable weights for each question, and computing a margin between the two totals for each question; and
- rating the questions in accordance with the margins.

4. Method according to claim 1 or 2, wherein the step of ranking the questions comprises the steps of:
- computing, for each question, margins between a weight of a cell corresponding to a most highly ranked target object and that question, and weights corresponding to other highly ranked target objects and that question; and
- rating the questions by comparing the margins of each question with the margins of other questions.

5. Method according to claim 1 or 2, further comprising the step of adjusting weights of cells corresponding to a guessed object in accordance to agreeability between a mapped weight of an answer and the cell weight before adjusting.

6. Method according to claim 5, further comprising the steps of:
- classifying the user according to user-specific information;
- storing the adjusted weights in a database associated with the class of the user; and
- using the associated database with a different user that belongs to the class of the user.

7. Method according to claim 6, wherein the user-specific information is acquired from the user.

8. Method according to claim 6, wherein the user-specific information is inferred from at least one answer to said at least one question.

9. Neural network structured in an X-by-Y matrix format, **characterized in that** each cell of the matrix defines an input-output connection weight, and **in that** the neural network can be utilized in a first mode, whereby elements of the X-axis are input nodes and elements of the Y-axis are output nodes, and in a second mode, whereby the elements of the Y-axis are input nodes and the elements of the X-axis are output nodes.

10. Electronic game to be implemented by the method according to any one of claims 1 to 8, for guessing an object that a user is thinking of, from a set of target objects, after asking the user at least one question, the game utilizing a neural network structured in a target objects-by-questions matrix format, **characterized in that** each cell of the matrix defines an input-output connection weight, and the neural network can be utilized in a first mode, whereby answers to asked questions are input nodes and the target objects are output nodes, and in a second mode, whereby the target objects are input nodes and the questions are output nodes, the game comprising:
- means for ranking the target objects by utilizing the neural network in the first mode;
- means for ranking the questions by utilizing the neural network in the second mode; and
- means for providing a guess in accordance with the ranking of the target objects.

11. Computer-readable medium bearing representations of instructions and data for causing a computer or hand-held device to perform a method according to any one of claims 1 to 8 in an electronic game according to claim 10.
